# EUROPÄISCHE PATENTANMELDUNG

(11) **EP 0 930 192 A2**
(43) Veröffentlichungstag der Anmeldung: **21.07.1999**
(21) Anmeldenummer: 99100767.5
(22) Anmeldetag: 16.01.1999
(51) Int. Cl.: B60K 31/00

(54) **Verfahren und Vorrichtung zur Regelung der Fahrgeschwindigkeit eines Fahrzeuges**

(30) Priorität: 20.01.1998 DE 19802249
(71) Anmelder: Weber, Baldrun, 98716 Geraberg (DE)
(72) Erfinder: Weber, Baldrun, 98716 Geraberg (DE)
(74) Vertreter: Liedtke, Klaus, Dr.

(57) **Zusammenfassung**

Die Erfindung betrifft ein Verfahren und eine Vorrichtung zur Regelung der Fahrgeschwindigkeit eines Fahrzeuges, vorzugsweise eines Kraftfahrzeuges, wobei in das Lenkrad des Fahrzeuges mindestens ein Druck- und/oder Berührungssensor, welcher bei Berührung und/oder Druckausübung ein elektrisches Signal liefert, integriert oder am Lenkrad angebracht ist.

## Beschreibung

Die Erfindung betrifft ein Verfahren und eine Vorrichtung zur Regelung der Fahrgeschwindigkeit eines Fahrzeugs, vorzugsweise eines Kraftfahrzeugs, wobei in das Lenkrad des Fahrzeugs mindestens ein Druck- und/oder Berührungssensor, welcher bei Berührung und/oder Druckausübung ein elektrisches Signal liefert, integriert oder am Lenkrad angebracht ist.

Die Regelung der Geschwindigkeit eines Kraftfahrzeuges erfolgt bekannterweise in der Art, daß mit dem Fuß ein im Fußraum des Fahrerplatzes befindliches Pedal betätigt ( 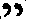 Gas gegeben) wird. Bekannt sind weiterhin an oder in der Nahe des Lenkrades angebrachte, per Hand zu betätigende Hebel zur Geschwindigkeitssteuerung.

Darüber hinaus wurden zur Entlastung des Fahrers auf Strecken wie Autobahnen, auf denen über längere Zeit mit gleichbleibender Geschwindigkeit gefahren werden kann, Geschwindigkeitsregelanlagen für Kraftfahrzeuge entwickelt. Bei diesen Geschwindigkeitsregelanlagen wird vom Fahrer ein Geschwindigkeitssollwert vorgegeben und die Geschwindigkeitsregelanlage regelt die Fahrgeschwindigkeit immer konstant auf den vorgegebenen Sollwert aus. Die Geschwindigkeitssollwerte können vorgegeben, gespeichert, aktiviert und gelöscht werden. Dazu dienen z.B. Bedienhebel (EP 441 961 A1, DE 43 38 098 C2), Kippschalter (DE 17 38 660 U1) oder Drucktasten (WO 86/00049 A1, DE 43 01 292 A1).

Zur Änderung der Geschwindigkeit muß vom Fahrer über die genannten Bedienelemente ein neuer Sollwert eingestellt werden. Da die Einstellung des neuen Sollwertes im allgemeinen durch Inkrementieren oder Dekrementieren des aktuellen Sollwertes oder durch Aktivieren eines gespeicherten Wertes erfolgt, ist das mit einem entsprechenden Zeitaufwand verbunden bzw. nur in vorgegebenen Abstufungen möglich.

Schnelle Geschwindigkeitsänderungen können mit diesen Vorrichtungen nicht realisiert werden.

Diese Vorrichtungen haben somit den Nachteil, daß sie im Straßenverkehr außerhalb der Autobahnen nicht oder nur in Ausnahmefällen einsetzbar sind.

Es sind weiterhin Vorrichtungen bekannt, bei denen Drucksensoren in das Lenkrad integriert sind. DE 197 12 081 A 1 beschreibt eine Sicherheitseinrichtung zur Abschaltung eines Tempomates, bei der in das Lenkrad Kontaktschleifen eingearbeitet sind. Die Vorrichtung schaltet den Tempomat ab, sobald die Hände des Fahrers das Lenkrad verlassen und die Kontaktschleifen dadurch kein Signal mehr liefern. In WO 97 / 12450 ist ein Sound-Synthesizer-System beschreiben, welches über Drucksensoren im Lenkrad bedient werden kann. Eine Steuerung der Geschwindigkeit eines Fahrzeuges ist mit diesen Anordnungen nicht möglich.

Aufgabe der Erfindung ist es, ein Verfahren und eine Vorrichtung zur Steuerung der Geschwindigkeit eines Kraftfahrzeuges anzugeben, welche den Fahrer von der Notwendigkeit des Gasgebens mit dem Fuß entbindet, bequem, schnell und leicht bedienbar ist und auch auf Strecken, die mit oft wechselnder Geschwindigkeit befahren werden, eingesetzt werden kann. Die Erfindung soll nicht unbedingt ein Ersatz, sondern ein sinnvolle Ergänzung zu Gaspedal und Tempomat sein.

Diese Aufgabe wird erfindungsgemäß durch ein Verfahren mit den kennzeichnenden Merkmalen von Anspruch 1 und eine Vorrichtung mit den kennzeichnenden Merkmalen von Anspruch 8 gelöst.

Vorteilhafte Aus- und Weiterbildungen des Erfindungsgegenstandes sind in den Unteransprüchen angegeben.

Die mit der Erfindung erzielten Vorteile bestehen vor allem darin, daß der Fahrer die Geschwindigkeit des Fahrzeugs durch Fingerdruck steuern kann und dadurch der rechte Fuß des Fahrers entlastet wird. Die erfindungsgemäße Vorrichtung ist bequem und leicht bedienbar, auch auf Strecken außerhalb der Autobahnen einsetzbar und trägt deutlich zur Verbesserung des Fahrkomforts bei. Die Vorrichtung kann alternativ zur üblichen Fußhebelsteuerung (eine von beiden ist jeweils nur aktiv) oder parallel zur Fußhebelsteuerung (beide sind aktiv) betrieben werden. Sie kann vorteilhaft auch in Fahrzeugen tur körperbehinderte Fahrer zur Geschwindigkeitssteuerung eingesetzt werden. Ein besonderer Vorzug der Erfindung besteht weiterhin in der Nutzung des besseren Tastsinnes bzw. Dosiergefühls der menschlichen Hand gegenüber dem Fuß.

Die Erfindung wird im folgenden anhand von Beispielen beschrieben.

In der zugehörigen Zeichnung zeigen:
Figur 1 die Anordnung der erfindungsgemäßen Vorrichtung am Lenkrad und
Figur 2 ein Blockschaltbild für die Signalverarbeitung.

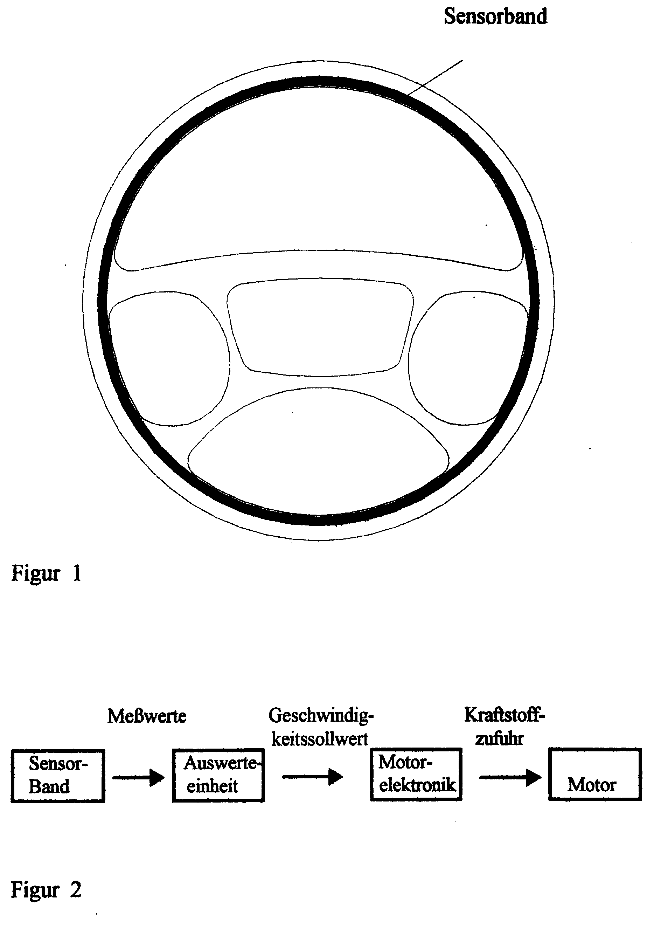

Figur 1 erläutert in schematischer Darstellung das Lenkrad eines Kraftfahrzeuges mit einer Variante der erfindungsgemäßen Vorrichtung. Wie aus der Figur ersichtlich, ist an der Innenseite des Lenkradkranzes in die Grifffläche ein ca. 1 bis 1,5 cm breites umlaufendes Sensorband derart integriert, daß es mit den Fingerspitzen und insbesondere durch die Daumen des Fahrers bequem und gut erreichbar ist. Dieses Sensorband ist so ausgeführt, daß es sowohl eine Berührung ohne Druckausübung signalisiert als auch ein vom Druck, der durch die Fingerspitzen auf das Lenkrad ausgeübt wird, abhängiges Signal liefert und diese beiden Signale an eine Auswerteeinheit überträgt. Zweckmäßigerweise ist das zweite Signal dem ausgeübten Druck proportional. Die Signalübertragung erfolgt im Ausführungsbeispiel auf elektrischem Wege.

Figur 2 zeigt in Form eines Blockschaltbildes ein Beispiel zur Ankopplung des Sensorbandes an die Auswerteeinheit, die Motorelektronik und den Motor. Die Auswerteeinheit leitet aus den Signalen des Sensorbandes Geschwindigkeitssollwerte zum Beschleunigen oder Abbremsen des Fahrzeuges oder zum Halten der aktuellen Fahrgeschwindigkeit ab und überträgt diese Geschwindigkeitssollwerte in geeigneter Form an eine Steuereinheit zur Regelung der Fahrgeschwindigkeit des Fahrzeugs.

Die Geschwindigkeit des Fahrzeugs wird im Ausführungsbeispiel nach folgendem Prinzip gesteuert: Durch Druck auf das Sensorband wird die Geschwindigkeit erhöht ( "Gas gegeben" ), durch einfache Berührung wird die Geschwindigkeit beibehalten und die Geschwindigkeit gesenkt, wenn die Finger vom Sensorband genommen werden, somit keine Berührung mehr erfolgt und das Lenkrad dabei am Außenumfang und den anderen nicht sensitiven Bereichen gehalten wird.

Wird ein Druck auf das Sensorband ausgeübt, so beschleunigt das Kraftfahrzeug mit einer dem Druck proportionalen Beschleunigung. Das Fahrzeug wird solange beschleunigt, wie der Druck ausgeübt wird bzw. bis die Endgeschwindigkeit erreicht ist. Wenn der Fahrer nicht weiter beschleunigen will, so beendet er die Druckausübung. Solange der Fahrer danach das Sensorband weiterhin berührt, fährt das Fahrzeug mit der erreichten Geschwindigkeit weiter. Sobald das Sensorband nicht mehr berührt wird, wird die Geschwindigkeit durch Drosseln der Treibstoffzufuhr gesenkt. Auf diese Weise kann der Fahrer die Geschwindigkeit des Kraftfahrzeuges einfach und bequem mit einem oder mehreren Fingern steuern. Da zur Beibehaltung der Fahrgeschwindigkeit die einfache Berührung des Sensorbandes ohne Druckausübung ausreicht, kann die Fahrgeschwindigkeit auf diese Weise über längere Zeit ohne Ermüdung der Hand- bzw. Fingermuskulatur gesteuert werden.

Durch die unmittelbare Auswirkung der Druckausübung bzw. des Berührens und Loslassens des Sensorbandes auf die Fahrgeschwindigkeit bekommt der Fahrer sehr schnell ein gutes Gefühl für die Steuerung und die Eingewöhnungszeit ist sehr kurz.

Bei Betätigung der Bremse wird unabhängig vom ausgeübten Druck auf das Sensorband der Geschwindigkeits-Sollwert automatisch auf Null gesetzt.

Dadurch werden Fehlbedienungen, wie z.B. Gasgeben am Lenkrad bei gleichzeitigem Bremsen oder auch ungewollte Beschleunigungen, wie sie durch ein eventuelles Festklammern am Lenkrad bei Erschrecken in Gefahrensituationen auftreten können, ausgeschlossen.

Die Vorrichtung ist über ein Schaltelement ein- und ausschaltbar. Als Schalter kann ein einfacher Handschalter dienen oder ein Schalter, der durch Signale der Druck- bzw. Berührungssensoren angesteuert wird. Der Fahrer hat somit beispielsweise die Möglichkeit, auf herkömmlichem Wege mit dem Gaspedal anzufahren und dann auf die Steuerung mittels des Sensorbandes umzuschalten und mit dieser weiter zu fahren.

Die Druckausübung auf das Sensorband kann mit einem oder beiden Daumen oder auch den anderen Fingern erfolgen, wobei ersteres der normalen Lage der Hände am Lenkrad am besten entspricht.

Das Sensorband wurde im beschriebenen Ausführungsbeispiel umlaufend um das Lenkrad ausgeführt, um bei beliebiger Griffhaltung des Lenkrades und auch bei Lenkbewegungen die sensitive Fläche immer im Griffbereich zu haben. Zur Steuerung der Geschwindigkeit reicht es aus, mit einem Finger zu drucken. Falls mit mehreren Fingern bzw. den Fingern beider Hände gedrückt wird, so wird der jeweils höchste Druck als Sollwert genutzt. Die Berührung bzw. Druckausübung kann an einer beliebigen Stelle des Sensorbandes erfolgen. Ein Wechsel der Hände und der Steile, an denen die Berührung bzw. Druckausübung erfolgt, hat somit wie auch ein Übergreifen bei starkem Lenkradeinschlag keinerlei nachteilige Auswirkung.

In einer zweiten Ausführung besteht das Sensorband aus einer Vielzahl von Einzelsensoren, von denen jeder sowohl das Berührungs- als auch das Drucksignal an die Auswerteeinheit liefert. In diesem Ausführungsbeispiel erfolgt eine Erkennung und Bestimmung des bzw. der Bereiche, an denen der Druck ausgeübt wird. Wenn dieser bestimmte Bereich wieder losgelassen wird, so wird das als Signal zum Verringern der Geschwindigkeit interpretiert, obwohl andere sensitive Bereiche noch berührt werden. Das hat den Vorteil, daß bei einer Druckausübung z.B. mit dem Daumen zum Verringern der Geschwindigkeit nur der Daumen angehoben zu werden braucht und die restlichen Finger und die Handfläche auf den anderen sensitiven Bereichen liegen bleiben können ( diese Bereiche sind praktisch inaktiv geschaltet).

Weitere Ausführungsmöglichkeiten bestehen darin, daß die sensitiven Bereiche des Lenkrades nicht als umlaufendes Band ausgeführt sind, sondern aus einem oder mehreren getrennten Bereichen bestehen oder die gesamte Lenkradoberfläche als ein Sensor ausgebildet ist oder mit Sensoren überzogen ist.

In einer weiteren Ausführungen werden einzelnen Sensorbereichen abhängig oder unabhängig von der Drehstellung des Lenkrades verschiedene Funktionen zugeordnet, wie beispielsweise links oben 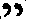 Gas geben", rechts oben 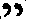 Gas wegnehmen" und unten 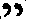 Geschwindigkeit halten".

Als Berührungs- bzw. Drucksensoren werden vorteilhaft piezoresistive und/oder kapazitive Sensoren und/oder andere Sensoren mit vergleichbaren Eigenschaften eingesetzt.

Für die Anordnung der Auswerteeinheit bestehen verschiedene Möglichkeiten. Beispielsweise kann die Auswerteeinheit mit in das Lenkrad oder in die Motorelektronik integriert werden.

Eine vorteilhafte Ausgestaltung sieht vor, daß eine optische und/oder akustische Anzeigeeinrichtung vorgesehen ist, welche den Einschaltzustand der Vorrichtung signalisiert.

## Patentansprüche

1. Verfahren zur Regelung der Fahrgeschwindigkeit eines Fahrzeugs, vorzugsweise eines Kraftfahrzeugs, wobei in das Lenkrad des Fahrzeugs mindestens ein Druck- und/oder Berührungssensor, welcher bei Berührung und/oder Druckausübung ein elektrisches Signal liefert, integriert oder am Lenkrad angebracht ist, **dadurch gekennzeichnet**, daß mindestens ein Druck- und/oder Berührungssensor dem auf ihn ausgeübten Druck proportionale Signale liefert und die Signale an eine Auswerteeinheit übertragen werden, welche aus den Signalen Geschwindigkeitssollwerte zum Beschleunigen oder Abbremsen des Fahrzeuges oder zum Halten der aktuellen Fahrgeschwindigkeit ableitet und diese Geschwindigkeitswerte in geeigneter Form an eine Steuereinheit zur Regelung der Fahrgeschwindigkeit des Fahrzeugs überträgt.

2. Verfahren nach Anspruch 1 , **dadurch gekennzeichnet**, daß eine Druckausübung auf mindestens einen Druck- und/oder Berührungssensor eine Erhöhung der Geschwindigkeit des Fahrzeugs mit einer dem ausgeübten Druck proportionalen Beschleunigung bewirkt.

3. Verfahren nach einem der Ansprüche 1 oder 2, **dadurch gekennzeichnet**, daß eine Berührung der Druck- und/oder Berührungssensoren ohne Druckausübung das Beibehalten der aktuellen Fahrgeschwindigkeit bewirkt.

4. Verfahren nach einem der Ansprüche 1 bis 3, **dadurch** **gekennzeichnet**, daß ein Loslassen der Druck- und/oder Berührungssensoren in der Form, daß das Lenkrad nur noch an den nicht sensitiven Bereichen berührt und gehalten wird, eine Verringerung der Geschwindigkeit des Fahrzeugs bewirkt.

5. Verfahren nach einem der Ansprüche 1 bis 4, **dadurch gekennzeichnet**, daß eine Vielzahl von Druck- und/oder Berührungssensoren oder eine Anordnung von mehreren Druck- und/oder Berührungssensoren in mehreren sensitiven Bereichen am Lenkradkranz vorgesehen sind/ist und eine Erkennung und Bestimmung des/der Bereiche erfolgt, an denen Druck ausgeübt wird.

6. Verfahren nach Anspruch 5, **dadurch gekennzeichnet**, daß ein Loslassen dieses/dieser erkannten Bereiche bei gleichzeitiger weiterer Berührung der anderen sensitiven Bereiche des Lenkradkranzes ein Signal zur Geschwindigkeitsverringerung auslöst.

7. Verfahren nach einem der Ansprüche 5 oder 6, **dadurch gekennzeichnet**, daß einzelnen Bereichen der mit Druck- und/oder Berührungssensoren versehenen Grifffläche des Lenkradkranzes abhängig oder unabhängig von der Drehstellung des Lenkrades die Funktionen Geschwindigkeit erhöhen, Geschwindigkeit halten und Geschwindigkeit verringern zugeordnet werden.

8. Vorrichtung zur Regelung der Fahrgeschwindigkeit eines Fahrzeugs, vorzugsweise eines Kraftfahrzeugs, wobei in das Lenkrad des Fahrzeugs mindestens ein Druck- und/oder Berührungssensor, welcher bei Berührung und/oder Druckausübung ein elektrisches Signal liefert, integriert oder am Lenkrad angebracht ist, **dadurch gekennzeichnet**, daß mindestens ein Druck- und/oder Berührungssensor derart gestaltet ist, daß er dem auf ihn ausgeübten Druck proportionale Signale liefert und daß er mit mindestens einer Auswerteeinheit verbunden ist, welche aus den Signalen Geschwindigkeitssollwerte zum Beschleunigen oder Abbremsen des Fahrzeugs oder zum Halten der aktuellen Fahrgeschwindigkeit ableitet, und diese Auswerteeinheit die Geschwindigkeitssollwerte in geeigneter Form an die Steuereinheit zur Steuerung der Fahrgeschwindigkeit des Fahrzeuges weiterleitet.
